Europäisches Patentamt

(19) European Patent Office

Office européen des brevets

(11) Numéro de publication: **0 253 034**
**B1**

(12) **FASCICULE DE BREVET EUROPEEN**

(45) Date de publication du fascicule du brevet:
**09.05.90**

(51) Int. Cl.⁵: **F16H 57/12**

(21) Numéro de dépôt: **86401577.1**

(22) Date de dépôt: **15.07.86**

(54) **Dispositif de transmission de mouvement entre un moyen moteur et un organe récepteur.**

(43) Date de publication de la demande:
**20.01.88 Bulletin 88/3**

(45) Mention de la délivrance du brevet:
**09.05.90 Bulletin 90/19**

(84) Etats contractants désignés:
**AT BE CH DE FR GB IT LI LU NL SE**

(56) Documents cités:
**DE-A- 2 538 460**
**US-A- 2 513 217**
**US-A- 3 151 494**

(73) Titulaire: **ATELIERS DE CONSTRUCTIONS DU CENTRE, Rue du Pré-la-Reine, F-63016 Clermont Ferrand(FR)**

(72) Inventeur: **Serieye, Daniel, 22, avenue des Cottages, F-69300 Caluire(FR)**

(74) Mandataire: **Netter, André, Cabinet NETTER, 40, rue Vignon, F-75009 Paris(FR)**

## Description

L'invention concerne un dispositif de transmission de mouvement entre un moyen moteur et un organe récepteur, permettant de rattraper automatiquement le jeu et l'usure de tous les éléments le constituant, tout en augmentant la rigidité d'ensemble du dispositif de transmission.

Un tel dispositif est applicable notamment à une installation de positionnement d'antenne de radar, à des machines-outils, en robotique, etc.

Dans de nombreuses applications, les dispositifs de transmission de mouvement doivent répondre aux conditions suivantes :
- ils doivent comprendre des moyens de rattrapage automatique de jeu et d'usure;
- ils doivent présenter une grande rigidité pour permettre le maintien de l'organe récepteur dans une position donnée;
- et, le plus souvent, ils doivent avoir un grand rapport de démultiplication pour permettre un positionnement très précis de l'organe récepteur.

On connaît déjà des dispositifs permettant de rattraper le jeu et l'usure sur un train d'engrenages formé de deux éléments dont les dentures sont en prise. Toutefois, ces dispositifs connus doivent être aménagés sur chaque train de la transmission, ce qui complique cette transmission, tout en diminuant son rendement et sans améliorer sa rigidité.

Il est également connu d'associer en parallèle avec un même organe récepteur, tel par exemple qu'une couronne dentée, deux ensembles identiques d'entraînement et de transmission qui travaillent en opposition. Chaque ensemble comprend un moteur d'entraînement ayant une puissance notablement supérieure à la puissance nécessaire d'entraînement de l'organe récepteur. Le moteur d'un des ensembles provoque le mouvement de l'organe récepteur dans un sens, tandis que le moteur de l'autre ensemble réalise une retenue en sens inverse et fonctionne comme ralentisseur. Lorsque le sens d'entraînement de l'organe récepteur est inversé, les fonctions de ces deux moteurs sont également inversées, le moteur réalisant l'entraînement devenant ralentisseur, tandis que le moteur faisant office de ralentisseur devient moteur d'entraînement. Il faut donc utiliser pour cela deux moteurs plus puissants que nécessaire, avec un asservissement compliqué. En outre, la rigidité de l'ensemble du dispositif de transmission n'est toujours pas améliorée.

On connaît aussi, d'après le document DE-A 2 538 460, un dispositif de transmission de mouvement entre un moyen moteur et un organe récepteur, du type comprenant deux ensembles identiques d'éléments de transmission, associées en parallèle à l'organe récepteur et comprenant chacun un élément de sortie coopérant avec l'organe récepteur pour le déplacer dans un sens ou dans le sens opposé.

Les deux ensembles de transmission sont entraînés par un même moteur et comprennent chacun un pignon de sortie en prise avec une crémaillère ou une couronne dentée.

Le dispositif du document précité incorpore aussi des moyens de compensation de jeu comprenant, pour l'un des ensembles de transmission, un organe de compression établissant une précontrainte dans la transmission.

Cet organe de compression est de construction délicate. De plus, le dispositif de transmission de mouvement nécessite généralement un frein électrique pour éviter tout déplacement de l'organe récepteur lorsque le dispositif ne fonctionne pas.

L'invention a pour objet un dispositif de transmission permettant d'éviter les inconvénients précités des dispositifs connus pourvus de moyens de rattrapage de jeu et d'usure et également d'augmenter de façon notable la rigidité de la transmission.

L'invention a également pour objet un dispositif de transmission de ce type, permettant d'utiliser des ensembles de transmission, par exemple des réducteurs à engrenage, qui sont de construction courante et qui sont disponibles sur le marché.

Elle propose à cet effet un dispositif de transmission de mouvement entre un moyen moteur et un organe récepteur, du type décrit dans le document précité, caractérisé en ce que chaque ensemble de transmission comprend un élément d'entrée de même axe de rotation que l'élément de sortie, en ce que chaque ensemble de transmission est logé dans un carter qui est monté libre à rotation par rapport à l'axe de l'élément de sortie dudit ensemble, et en ce que les deux carters sont reliés l'un à l'autre par des moyens de transmission de couple les obligeant à tourner en sens inverse et à la même vitesse chacun autour de l'axe de l'élément de sortie correspondant lorsqu'un couple de rotation autour de cet axe est appliqué à l'un des carters, le dispositif comprenant des moyens extérieurs auxdits carters et auxdits ensembles de transmission pour appliquer à l'un des carters un couple de rotation par rapport à l'axe de l'élément de sortie correspondant.

Grâce à ce montage particulier des carters dont chacun est libre en rotation autour de l'axe de l'élément de sortie de l'ensemble de transmission qu'il contient, et à l'application d'un couple extérieur déterminé à l'un des carters qui le transmet à l'autre carter, on peut ainsi d'une part rattraper le jeu et l'usure des ensembles de transmission dans les carters et, d'autre part, rattraper également le jeu entre l'élément de sortie de chaque ensemble de la transmission et l'organe récepteur, tout en appliquant chacun de ces éléments de sortie sur l'organe récepteur avec une précontrainte déterminée. Il en résulte un rattrapage total du jeu et de l'usure de l'ensemble du dispositif de transmission, ainsi que l'augmentation de la rigidité du dispositif de transmission due à l'application avec précontrainte des éléments de sortie du dispositif de transmission sur l'organe récepteur.

Selon une autre caractéristique de l'invention, les deux éléments d'entrée sont reliés l'un à l'autre par un mécanisme de transmission les obligeant à tourner autour de leurs axes dans le même sens et à la même vitesse.

Ce mécanisme de transmission entre les éléments d'entrée des deux ensembles de transmission constitue un point d'appui de la précontrainte entre l'organe récepteur et les deux éléments de sortie des ensembles de transmission et, de plus, permet l'entraînement du dispositif de transmission au moyen d'un seul moteur.

Selon une autre caractéristique de l'invention, le moyen moteur est supporté par le carter d'un des ensembles de transmission.

Il en résulte un meilleur équilibrage du dispositif de transmission, pour les deux sens d'entraînement de l'organe récepteur.

Selon une autre caractéristique de l'invention, les moyens extérieurs d'application d'un couple de rotation à l'un des carters sont constitués par au moins un ressort monté entre ce carter et un point fixe.

De cette façon, la précontrainte qui résulte de l'application d'un couple de rotation par ce ressort à l'un des carters est permanente et peut être réglée à une valeur prédéterminée.

Avantageusement, le couple de rotation qui est appliqué à un carter par ce ressort est sensiblement égal au couple nominal ou maximum d'entraînement qui est appliqué à l'organe récepteur par le dispositif de transmission et le moyen moteur.

On conserve ainsi le rattrapage de jeu et d'usure lors de l'entraînement de l'organe récepteur, dans toutes les conditions de foncationnement de l'installation comprenant cet organe récepteur.

Selon une forme d'exécution avantageuse du dispositif selon l'invention, les moyens de transmission de couple entre les carters sont des secteurs dentés qui sont solidaires des carters et qui sont deux à deux en prise.

Dans la description qui suit, faite à titre d'exemple, on se réfère aux dessins annexés, dans lesquels :

- la figure 1 est une vue schématique en élévation d'une partie d'une installation de positionnement d'antenne de radar, comprenant un dispositif de transmission se lon l'invention;
- la figure 2 est une vue partielle, à plus grande échelle, de ce dispositif de transmission associé à un moteur et à un organe récepteur;
- la figure 3 est une vue schématique partielle en coupe selon la ligne III-III de la figure 2;
- la figure 4 est une vue schématique partielle en coupe selon la ligne IV-IV de la figure 2.

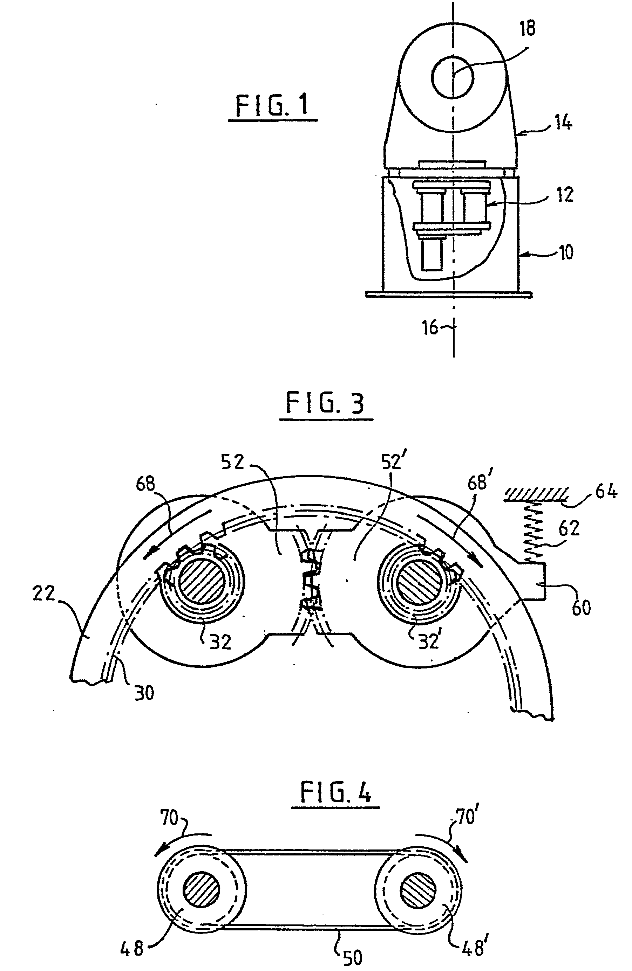

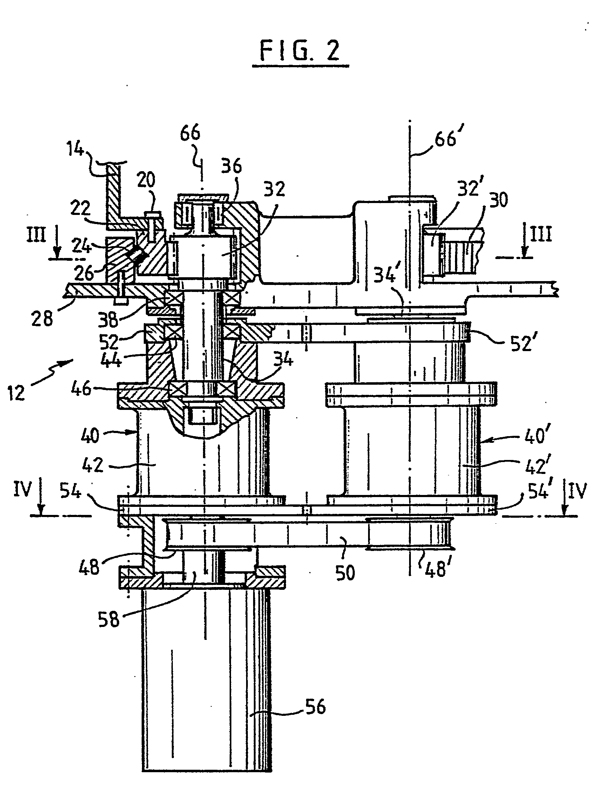

On se réfère d'abord à la figure 1, dans laquelle on a représenté, à titre d'exemple, une partie d'une installation de positionnement d'une antenne de radar qui est l'une des applications possibles d'un dispositif de transmission de mouvement selon l'invention.

Cette installation comprend un bâti fixe 10 contenant un mécanisme 12 permettant d'entraîner un bâti 14 en rotation autour d'un axe vertical 16, le bâti 14 étant destiné à porter un support d'antenne mobile en rotation autour d'un axe horizontal 18 sur ce bâti 14. Le mécanisme 12 d'entraînement du bâti 14 autour de l'axe vertical 16, et le mécanisme d'entraînement du support d'antenne autour de l'axe horizontal 18 constituent les mécanismes de réglage de l'angle de gisement et de l'angle de site, respectivement.

Le mécanisme 12 est représenté plus en détail en figure 2.

On voit sur cette figure que la base du châssis 14 est fixée par des vis 20 à une couronne circulaire 22 qui est elle-même supportée et guidée à rotation autour de l'axe vertical 16 par des roulements 24 portés par une couronne extérieure fixe 26 fixée sur une plaque horizontale supérieure 28 du bâti 10.

La couronne 22 comprend, sur sa face cylindrique interne, une denture 30 qui est en prise avec deux pignons 32, 32' d'axe vertical, portés par des arbres verticaux 34 et 34' respectivement. L'arbre vertical 34 portant le pignon 32 est guidé à son extrémité supérieure dans un roulement 36 porté par la plaque supérieure 28 du bâti fixe 10 et, en dessous du pignon 32, est supporté et guidé en rotation dans un autre roulement 38 supporté par la plaque supérieure 28.

La partie inférieure de l'arbre 32 forme l'arbre de sortie d'un réducteur à engrenages 40 dont le carter 42 est supporté par la partie inférieure de l'arbre 34 et est monté libre en rotation autour de l'axe de cet arbre, au moyen de roulements 44 et 46.

De même, l'arbre 34' du pignon 32' est l'arbre de sortie d'un réducteur 40' dont le carter 42' est supporté par l'arbre 34' et monté mobile en rotation autour de l'axe de cet arbre. Les deux réducteurs 40 et 40' sont identiques et ont le même rapport de démultiplication. Leurs arbres d'entrée, qui sont coaxiaux aux arbres de sortie 34 et 34', sont réunis entre eux, à l'extérieur des carters 42 et 42', par des moyens de transmission de couple qui les obligent à tourner dans le même sens et à la même vitesse et qui sont constitués, dans l'exemple représenté, par deux poulies 48 et 48' solidaires en rotation des arbres d'entrée et reliées entre elles par une courroie 50.

Les carters 42 et 42' des réducteurs sont également reliés l'un à l'autre par un mécanisme de transmission de couple qui les oblige à tourner en sens inverse et à la même vitesse chacun autour de l'axe vertical commun de son arbre d'entrée et de son arbre de sortie 34, 34' respectivement. Dans l'exemple représenté, ces moyens sont constitués par un secteur denté 52 solidaire en rotation de l'extrémité supérieure du carter 42 et venant en prise avec un secteur denté 52' solidaire en rotation de la partie supérieure du carter 42', et par un secteur denté 54 solidaire en rotation de la partie inférieure du carter 42 et venant en prise avec un secteur denté 54' solidaire de la partie inférieure du carter 42'.

Un moteur commun d'entraînement des deux réducteurs 40 et 40', désigné par la référence 56, est monté fixement sur la base du carter de l'un des réducteurs, par exemple sur la base du carter 42. L'arbre de sortie de ce moteur est reliée par un accouplement 58 à l'arbre d'entrée du réducteur 40.

Comme on le voit en figure 3, l'un des secteurs dentés solidaires des carters des réducteurs, par exemple le secteur denté 52' solidaire du carter 42', comprend un épaulement 60 formant siège d'appui de l'extrémité d'un ressort de compression 62 dont l'autre extrémité est en appui sur un élément 64 solidaire du bâti fixe 10. Le ressort de compression 62 a pour effet d'appliquer au carter 42' un couple de rotation tendant à faire tourner ce carter autour de l'axe 66' de l'arbre d'entrée et de l'arbre de sortie 34' correspondant, dans un sens identique au sens de rotation du pignon de sortie 32' correspondant quand ce pignon est moteur et fait tourner la couronne 22 dans le sens indiqué par la flèche 68'.

Comme on le verra par la suite, le couple de rotation exercé en permanence sur le carter 42' par le ressort 62 est sensiblement égal ou légèrement supérieur au couple maximal d'entraînement appliqué à la couronne 22 par le moteur 56 et par le dispositif de transmission constitué par les réducteurs 40 et 40' et les pignons de sortie 32 et 32'.

Le fonctionnement du mécanisme d'entraînement 12 et du dispositif de transmission selon l'invention est le suivant :

De par leur engrènement avec la denture 30 de la couronne 22, les pignons de sortie 32 et 32' sont obligés de tourner dans le même sens autour de leur axe vertical 66, 66', et à la même vitesse. Par ailleurs, les réducteurs 40 et 40' ont le même rapport de démultiplication, et leurs arbres d'entrée sont obligés de tourner dans le même sens et à la même vitesse, par la courroie 50 passant sur les poulies 48 et 48'.

Le ressort 62 exerce en permanence un couple sur le carter 42' du réducteur 40', ce qui a les conséquences suivantes :
- ce couple est réparti de façon égale entre les réducteurs 40 et 40' en raison de la liaison des carters 42 et 42' réalisée par les secteurs dentés 52 et 54 en prise avec les secteurs dentés 52' et 54' respectivement,
- sous la poussée du ressort 62, les carters 42 et 42' tournent autour de leur axe de rotation 66 et 66', respectivement, l'un dans le sens contraire des aiguilles d'une montre et l'autre dans le sens des aiguilles d'une montre en figure 3, tandis que les ensembles de transmission logés dans ce carter sont entraînés dans un sens correspondant au sens de rotation des carters, les dents des pignons 32 et 32' venant prendre appui sur la denture 30 de la couronne 22 en sens inverse, le pignon 32 tendant ainsi à entraîner la couronne 22 dans le sens de la flèche 68 tandis que le pignon 32' tend à l'entraîner dans le sens inverse indiqué par la flèche 68',
- les jeux entre pignons et roulements sont également rattrapés à l'intérieur des réducteurs 40 et 40', les poulies 48 et 48' qui sont solidaires des extrémités des arbres d'entrée des réducteurs étant également entraînées en sens inverse l'une de l'autre comme indiqué par les flèches 70 et 70'. La courroie 50 passant sur ces poulies permet de les retenir et de les maintenir en équilibre, de sorte que ces poulies 48 et 48' forment les points d'appui des ensembles de transmission logés dans les réducteurs 40 et 40'.

Ainsi, à l'arrêt et lorsque le moteur 56 ne produit aucun couple d'entraînement, les pignons 32 et 32' exercent sur la couronne 22 des couples opposés et qui sont sensiblement égaux à la moitié du couple exercé sur le carter 42' par le ressort 62.

Lorsque le moteur 56 produit un couple d'entraînement dans un sens ou dans l'autre, il en résulte un déséquilibre des couples exercés par les pignons 32 et 32' sur la couronne 22, l'un de ces couples diminuant et l'autre augmentant, de telle sorte que la couronne 22 est entraînée dans le sens correspondant.

De façon plus détaillée et en supposant, comme dans l'exemple représenté sur les dessins, que les arbres de sortie des réducteurs tournent dans le même sens que les arbres d'entrée, il se produit les phénomènes suivants :
- lorsque le moteur 56 produit un couple tendant à faire tourner la poulie 58 dans le sens indiqué par la flèche 70, le pignon 32 est entraîné en rotation dans le même sens pour faire tourner la couronne 22 dans le sens indiqué par la flèche 68.Le couple fourni par le moteur 56 se répartit entre les réducteurs 40 et 40' et vient s'ajouter au couple de précontrainte exercé à l'arrêt par le pignon 32 sur la denture 30 de la couronne 22 pour ainsi appliquer un couple moteur à la couronne 22 tendant à l'entraîner dans le sens de la flèche 68, tandis que ce couple produit par le moteur 56 et transmis par le réducteur 40' au pignon 32' vient s'opposer au courle de précontrainte appliqué par le pignon 32' à la denture 30 de la couronne 22. Le couple résultant exercé par le pignon 32' sur la denture de la couronne 22 diminue.

Ainsi, si l'on détermine le couple de précontrainte exercé par le ressort 62 sur les carters des réducteurs 40 et 40' de façon à ce qu'il soit légèrement supérieur au couple maximal produit par le moteur 56, le couple résultant appliqué par le pignon 32' à la denture de la couronne 22 sera diminué, sans être annulé, par le couple produit par le moteur 56 et tendra toujours à s'opposer à la rotation de la couronne 22 dans le sens de la flèche 68, ce qui garantit le rattrapage du jeu et de l'usure dans toutes les conditions de fonctionnement du dispositif de transmission selon l'invention.

Bien entendu, lorsque le moteur 56 produit un couple de sens opposé pour entraîner la couronne 22 dans le sens de la flèche 68', c'est le pignon 32' qui devient moteur, tandis que le couple résultant appliqué par le pignon 32 à la couronne 22 diminue jusqu'à une valeur faible tendant à s'opposer à la rotation de la couronne 22 dans le sens de la flèche 68', toujours pour le rattrapage total du jeu et de l'usure.

Dans des variantes de réalisation de l'invention, le ressort de compression 62 peut être remplacé par des moyens électriques ou hydrauliques appliquant à l'un des carters 42 et 42' un couple asservi au couple délivré par le moteur 56. Toutefois, cet asservissement du couple de précontrainte au couple produit par le moteur 56 ne permet pas d'augmenter la rigidité du dispositif de transmission à l'arrêt du moteur 56. Il est bien entendu possible de combiner ces moyens avec un ressort 62 appliquant à l'un des carters 42 et 42' un couple de précontrainte qui serait inférieur à la valeur maximale du couple fourni par le moteur 56.

De façon générale, le dispositif de transmission selon l'invention présente les avantages suivants :
- A vide (sans fourniture de couple par le moteur 56), chaque pignon 32, 32' exerce sur la couronne 22 un couple légèrement supérieur à la moitié du couple maximum d'entraînement de cette couronne, et qui n'est donc pas générateur d'usure anormale (lorsque le couple fourni par le ressort 62 est légèrement supérieur à la valeur maximale du couple fourni par le moteur 56);
- le rattrapage de jeu et d'usure est réalisé sur tous les éléments de la transmission bien qu'un seul dispositif soit utilisé pour cela;
- on peut utiliser des réducteurs 40 et 40' de construction courante, disponibles dans le commerce, pour autant qu'ils aient des arbres d'entrée et de sortie coaxiaux;
- la rigidité du dispositif de transmission entre le moteur 56 et la couronne 22 est pratiquement doublée.

En effet, selon l'invention, chaque pignon de sortie 32, 32' d'un réducteur 40, 40' est affecté à un sens de rotation de la couronne 22. Dans un système classique, le couple transmis par un moteur à la couronne 22 varierait de 0 à sa valeur nominale lorsque la couronne 22 est entraînée en rotation après avoir été arrêtée. Il en résulterait une déformation d du dispositif de transmission correspondant. Au contraire, selon l'invention, lorsque la couronne 22 est arrêtée et qu'aucun couple n'est exercé par le moteur 56, chaque ensemble de transmission constitué par un réducteur 40, 40' et le pignon de sortie 32, 32' correspondant est déjà soumis à un couple légèrement supérieur à la moitié du couple nominal d'entraînement, et subit donc une déformation légèrement supérieure à la moitié de la déformation d précitée.

Lorsque le moteur 56 produit un couple d'entraînement de la couronne 22, le couple appliqué à la couronne 22 par chaque ensemble de transmission varie, dans un sens ou dans l'autre, d'une quantité sensiblement égale à la moitié du couple nominal d'entraînement. Il en résulte, pour chaque ensemble de transmission, une déformation sensiblement égale à la moitié de la déformation d précitée.

Ainsi, dans le dispositif selon l'invention, chaque ensemble de transmission est deux fois moins déformé qu'un dispositif classique lorsqu'on passe de l'état à vide à l'état en charge. En d'autres termes, la rigidité du dispositif selon l'invention est sensiblement deux fois plus importante que celle d'un dispositif classique.

Par ailleurs, le dispositif selon l'invention n'utilise qu'un seul moteur d'entraînement, ayant une puissance correspondant à la puissance nécessaire d'entraînement de la couronne dentée 22.

L'invention présente également l'avantage d'utiliser des réducteurs d'un type classique dont les arbres d'entrée et de sortie sont coaxiaux. Des réducteurs du type planétaire à trains d'engrenages épicycloïdaux conviennent parfaitement.

## Revendications

1. Dispositif de transmission de mouvement entre un moyen moteur (56) et un organe récepteur (22), comprenant deux ensembles identiques (40, 40') d'éléments de transmission, associés en parallèle à l'organe récepteur (22) et comprenant chacun un élément de sortie (32, 32') coopérant avec l'organe récepteur (22) pour le déplacer dans un sens ou dans le sens opposé, caractérisé en ce que chaque ensemble de transmission comprend un élément d'entrée de même axe de rotation que l'élément de sortie (32, 32'), en ce que chaque ensemble de transmission est logé dans un carter (42, 42') qui est monté libre à rotation par rapport à l'axe de l'élément de sortie (32, 32') dudit ensemble, et en ce que les deux carters (42, 42') sont reliés l'un à l'autre par des moyens de transmission de couple (52, 52', 54, 54') les obligeant à tourner en sens inverse et à la même vitesse chacun autour de l'axe de l'élément de sortie (32, 32') correspondant lorsqu'un couple de rotation autour de cet axe est appliqué à l'un des carters, le dispositif comprenant des moyens (62) extérieurs auxdits carters (42, 42') et auxdits ensembles de transmission pour appliquer à l'un des carters un couple de rotation par rapport à l'axe de l'élément de sortie correspondant.

2. Dispositif selon la revendication 1, caractérisé en ce que les deux éléments d'entrée sont reliés l'un à l'autre par un mécanisme de transmission (48, 48', 50) les obligeant à tourner autour de leurs axes dans le même sens et à la même vitesse.

3. Dispositif selon l'une des revendications précédentes, caractérisé en ce que le moyen moteur (56) est supporté par le carter (42) de l'un des ensembles de transmission.

4. Dispositif selon l'une des revendications précédentes, caractérisé en ce que les moyens extérieurs d'application d'un couple à l'un des carters sont constitués par un ressort (62) monté entre ce carter et un point fixe (64).

5. Dispositif selon l'une des revendications précédentes, caractérisé en ce que le couple de rotation appliqué à un carter (42') par les moyens extérieurs (62) précités tend à faire tourner ce carter (42') dans le sens de rotation de l'élément de sortie (32') correspondant quand cet élément de sortie (32') est moteur et entraîne l'organe récepteur (22).

6. Dispositif selon l'une des revendications précédentes, caractérisé en ce que le couple de rotation appliqué à chaque carter par les moyens extérieurs (62) est sensiblement égal ou légèrement supérieur à la moitié du couple maximum fourni par le moyen moteur (56) pour l'entraînement de l'organe récepteur (22).

7. Dispositif selon l'une des revendications précédentes, caractérisé en ce que les moyens de transmission de couple entre les deux carters (42, 42') sont des secteurs dentés (52, 52', 54, 54') solidaires des carters et venant deux à deux en prise.

8. Dispositif selon l'une des revendications précédentes, caractérisé en ce que les ensembles de transmission sont des réducteurs (40, (40') à engrenages, en particulier à trains d'engrenages épicycloïdaux.

## Claims

1. A power transmission device for transmitting motion between drive means (56) and a driven member (22), the device comprising two identical assemblies (40, 40') of transmission elements associated in parallel with the driven member (22) and each including an outlet element (32, 32') co-operating with the driven member (22) in order to displace it one direction or in the opposite direction, the device being characterized in that each transmission assembly further includes an inlet element having the same axis of rotation as the outlet element (32, 32'), in that each transmission assembly is received in a housing (42, 42') which is mounted free to rotate about the axis of the outlet element (32, 32') of said assembly, and in that the two housings (42, 42') are interconnected by torque transmission means (52, 52', 54, 54') obliging them to rotate in opposite directions and at the same speed about the axes of their corresponding outlet elements (32, 32') when torque about said axis is applied to one of the housings, the device including external means (62) outside said housings (42, 42') and said transmission assemblies for applying torque to one of the housings about the axis of the corresponding outlet element.

2. A device according to claim 1, characterized in that the two inlet elements are interconnected by a transmission mechanism (48, 48', 50) constraining them to turn about their axes in the same direction and at the same speed.

3. A device according to any preceding claim, characterized in that the drive means (56) are supported by the housing (42) of one of the transmission assemblies.

4. A device according to any preceding claim, characterized in that the external means for applying torque to one of the housings are constituted by a spring (62) mounted between said housing and a fixed point (64).

5. A device according to any preceding claim, characterized in that the torque applied to one of the housings (42') by the above-mentioned external means (62) tends to rotate said housing (42') in the direction of rotation of the corresponding outlet element (32') when said outlet element (32') is driving the driven member (22).

6. A device according to any preceding claim, characterized in that the torque applied to each housing by the external means (62) is substantially equal to or slightly greater than one half the maximum torque provided by the drive means (56) for driving the driven member (22).

7. A device according to any preceding claim, characterized in that the means for transmitting torque between the two housings (42, 42') are toothed sectors (52, 52', 54, 54') integral with the housings and meshing in pairs.

8. A device according to any preceding claim, characterized in that the transmission assemblies are stepdown gear assemblies (40, 40'), in particular epicyclic gear trains.

**Patentansprüche**

1. Kraftübertragungsvorrichtung zwischen einem Antriebsmittel (56) und einem getriebenen Glied (22), mit zwei identischen von Übertragungsgliedern gebildeten Einheiten (40, 40'), die in paralleler Anordnung dem getriebenen Glied (22) zugeordnet sind und von denen jede ein Ausgangsglied (32, 32') umfasst, das mit dem getriebenen Glied (22) zusammenwirkt, um es in der einen Richtung oder in der entgegengesetzten Richtung zu verschieben, dadurch gekennzeichnet, dass jede Übertragungseinheit ein Eingangsglied mit derselben Drehachse wie das Ausgangsglied (32, 32') umfasst, dass jede Übertragungseinheit einem Gehäuse (42, 42') angeordnet ist, das im Verhältnis zur Achse des Ausgangsgliedes (32, 32') der genannten Einheit freidrehend montiert ist, und dass die beiden Gehäuse (42, 42') miteinander durch Momentübertragungsmittel (52, 52', 54, 54') verbunden sind, durch welche sie mit gleicher Geschwindigkeit in eine gegenläufige Drehbewegung um die Achse des entsprechenden Ausgangsgliedes (32, 32') versetzt werden, wenn ein Drehmoment um diese Achse auf eines der Gehäuse aufgebracht wird, wobei die Vorrichtung ausserhalb der vorgenannten Gehäuse (42, 42') und der vorgenannten Übertragungseinheiten liegende Mittel (62) umfasst, um auf eines der Gehäuse ein Drehmoment im Verhältnis zur Achse des entsprechenden Ausgangsgliedes auszuüben.

2. Vorrichtung nach Anspruch 1, dadurch gekennzeichnet, dass die beiden Eingangsglieder miteinander durch eine Kraftübertragung (48, 48', 50) verbunden sind, durch die sie mit gleicher Geschwindigkeit in eine gleichsinnige Drehbewegung um ihre Achse versetzt werden.

3. Vorrichtung nach einem der vorstehenden Ansprüche, dadurch gekennzeichnet, dass das Antriebsmittel (56) von dem Gehäuse (42) der einen Übertragungseinheit getragen wird.

4. Vorrichtung nach einem der vorstehenden Ansprüche, dadurch gekennzeichnet, dass die aussenliegenden Mittel zur Aufbringung eines Momentes auf eines der Gehäuse von einer zwischen diesem Gehäuse und einem Festpunkt (64) montierten Feder (62) gebildet werden.

5. Vorrichtung nach einem der vorstehenden Ansprüche, dadurch gekennzeichnet, dass das von den vorgenannten aussenliegenden Möglichkeiten (62) auf das Gehäuse (42') ausgeübte Drehmoment dazu neigt, dieses Gehäuse (42') in eine zur Drehrichtung des entsprechenden Ausgangsgliedes (32') gleichgerichtete Drehbewegung zu versetzen, wenn dieses Ausgangsglied (32') das Antriebsglied ist und das getriebene Glied (22) antreibt.

6. Vorrichtung nach einem der vorstehenden Ansprüche, dadurch gekennzeichnet, dass das durch die aussenliegenden Mittel (62) auf jedes Gehäuse ausgeübte Drehmoment merklich gleich oder geringfügig grösser ist als die Hälfte des von dem Antriebsglied (56) für den Antrieb des getriebenen Gliedes (22) aufgebrachte Höchstmoment.

7. Vorrichtung nach einem der vorstehenden Ansprüche, dadurch gekennzeichnet, dass die Mittel zur Drehmomentübertragung zwischen den beiden Gehäusen (42, 42') von fest mit den Gehäusen verbundenen und jeweils paarweise in Eingriff kommenden Zahnsegmenten (52, 52', 54, 54') gebildet sind.

8. Vorrichtung nach einem der vorstehenden Ansprüche, dadurch gekennzeichnet, dass die Übertragungseinheiten Untersetzungsgetriebe (40, 40'), inbeseondere mit Umlaufgetrieben, sind.

FIG. 1

18

14

12

10

16

FIG. 3

68
52
52'
68'
64
62
22
60
30
32
32'

FIG. 4

70
70'
48
50
48'

FIG. 2